# EUROPEAN PATENT SPECIFICATION

(11) **EP 3 704 931 B1**
(45) Date of publication and mention of the grant of the patent: **13.10.2021**
(21) Application number: 19213641.4
(22) Date of filing: 04.12.2019
(51) Int. Cl.: B62D 11/04, B62D 11/00, A01D 34/64, B60K 7/00, B60L 1/00, B60L 15/02

(54) **TRAVELING VEHICLE**
FAHRENDES FAHRZEUG
VÉHICULE DE DÉPLACEMENT

(30) Priority: 06.03.2019 JP 2019040292
(43) Date of publication of application: 09.09.2020
(73) Proprietor: Kubota Corporation, Osaka-shi, Osaka 556-8601 (JP)
(72) Inventor: MANJI, Yasuhiro, SAKAI-SHI, OSAKA, 5900823 (JP)
(74) Representative: Cabinet Beau de Loménie

(56) References cited:
- EP-A1- 3 220 014
- EP-A2- 2 327 607
- WO-A1-2004/071800
- US-A1- 2012 323 420
- US-A1- 2016 274 588
- US-A1- 2017 005 599
- US-A1- 2017 246 957

## Description

### Technical Field

The present invention relates to a traveling vehicle capable of driving a pair of left and right driving wheels independently of each other.

### Background Art

Conventionally, there has been used a traveling vehicle having a pair of left and right drive wheels that are driven independently of each other by a pair of left and right motors. As such traveling vehicle, there is one in which PI (Proportional-Integral) control is employed for controlling currents running in the motors. The PI control is known, so its detailed explanation is omitted herein. But, PI control effects control by combining the so-called proportional operation and the integral operation. A technique for controlling driving of a vehicle with utilization of PID (Proportional-Integral-Differential) control developed from such PI control is known from e.g. Patent Document 1 identified below.

Patent Document 1 discloses a control device for a vehicle which controls a current of a motor for driving wheels of the vehicle by the PID control. This control device includes an integral term correction gain calculation section. The integral term correction gain calculation section calculates an integral term correction gain for correction of an output of an integral term of the PID control in order to be able to stabilize the behavior of the vehicle even in the event of occurrence of "wobbling" in steering. Such integral term correction gain is calculated based on a steering angle calculated from a yaw rate and a steering angle provided by the driver. The yaw rate is obtained from a curvature of the traveling path and a vehicle speed. In particular, the integral term correction gain is calculated based on a differential value obtained by time differentiation of result of comparison between the steering angle calculated from the yaw rate and the driver's steering angle. And, this control device is configured such that the greater the differential value, the smaller the integral term correction gain.

### Prior Art Document

### Patent Document

Patent Document 1: JP2017-132406A

### Disclosure of the Invention

### Problem to be Solved by Invention

For instance, some traveling vehicles are configured such that a small turning travel is made possible by rotating one of the pair of left and right motors and stopping the other and causing it to spin-turn at its present position. When such small-turn traveling is to be carried out, an operational position of an operational lever for giving a driver's instruction to one motor is often a position corresponding to a low-speed instruction near the zero speed. In such case, in the technique disclosed in Patent Document 1, if an integral term correction gain is set based on a differential value obtained by the time differentiation of the result of comparison between a steering angle calculated from a yaw rate and a steering angle provided by the driver, there is possibility of the driving wheels may be locked at the zero speed or at an extremely low speed. As a result, a feeling of discomfort or "wrongness" may be provided to the user.

In view of the above, there is a need for a traveling vehicle capable of reducing such feeling of discomfort or wrongness to the user.

### Means for Solving Problem

According to a characterizing feature of a traveling vehicle relating to the present invention, the traveling vehicle comprises:
a pair of left and right driving wheels;
a pair of left and right motors capable of driving the pair of left and right driving wheels independently of each other;
an operational amount reception section capable of receiving operational amounts respectively for the pair of left and right motors;
a setting section capable of setting a period of a first control method having a predetermined first control parameter and a period of a second control method having a predetermined second control parameter, within a predetermined control cycle for controlling driving of the motors, in accordance with the operational amounts; and
a motor driving section capable of driving the respective motors based on result of setting made by the setting section.

With the above-described characterizing arrangement, in case the motors are controlled by a control method having set control parameters (a control gain, various limit values, switchover of control mode or algorithm, maps, ON/OFF of energization of motors, etc.), even if the user carries out an acceleration or deceleration, it is possible to improve discontinuity in the control parameters (in particular, a gain) at the time of switchover of the control method. Accordingly, in accordance with the operational amounts received by the operational amount reception section and without giving feeling of discomfort or wrongness to the user, the traveling vehicle is allowed to travel smoothly.

Preferably, the setting section progressively decreases a ratio of one of the period of the first control method and the period of the second control method within the control cycle from 100% to 0% and progressively increases a ratio of the other of the period of the first control method and the period of the second control method within the control cycle from 0% to 100%.

With the above-described arrangement, in association with the progressive reduction of the ratio of one of the period of the first control method and the period of the second control method within the control cycle, the ratio of the other of the period of the first control method and the period of the second control method within the control cycle is progressively increased. With this, the control cycle is caused to undergo an intermediate (transitional) state between the state of the control cycle consisting entirely of the period of the first control method and the state of the control cycle consisting entirely of the period of the second control method. Therefore, irregularity in the control parameter at the time of switchover of the control method can be alleviated, thus realizing smooth switchover of the control method. Moreover, with this above-described arrangement, change of control parameter is possible in a manner similar to that of the known DUTY control, so the control can be carried out easily.

Further, preferably, the setting section sets the period of the first control method within the control cycle to zero when a rotational speed of the motor is less than a predetermined rotational speed and sets the period of the second control method within the control cycle to zero when the rotational speed of the motor is equal to or greater than the predetermined rotational speed.

With the above-described arrangement, when the control method is switched over in accordance with a rotational speed, smooth traveling is made possible without giving feeling of discomfort or wrongness to the user with respect to the behavior of the traveling vehicle.

Or, preferably, the setting section is configured to set both the period of the first control method and the period of the second control method within the control cycle to values greater than zero, in case the operational amount increase the rotational speed of the motor at the time of reception of this operational amount to be greater than a preset change amount.

With the above-described arrangement, when the control method is to be switched over according to an acceleration, smooth traveling is made possible without giving feeling of discomfort or wrongness to the user respecting the behavior of the traveling vehicle.

Further, preferably:
the first control method is PI control in which an integral gain is a predetermined first value and a proportional gain is a predetermined second value; and
the second control method is P control in which the integral gain is zero value and the proportional gain is a predetermined third value.

With the above-described arrangement, when the control method is switched over between the PI control and the P control, smooth traveling is made possible without giving feeling of discomfort or wrongness to the user respecting the behavior of the traveling vehicle.

Further, preferably, the pair of left and right driving wheels are used also as steerable wheels.

With the above-described arrangement, e.g. also in case a turning is made by not rotating one of the pair of left and right driving wheels and driving the other of the pair of left and right driving wheels, it is possible to avoid giving damage to the road surface.

### BRIEF DESCRIPTION OF THE DRAWINGS

Fig. 1 is a perspective view of a traveling vehicle,
Fig. 2 is a system diagram showing an electric system and a power system of the traveling vehicle, and
Fig. 3 is an explanatory view of periods of P control and periods of PI control set within a control cycle.

### BEST MODE OF CARRYING OUT THE INVENTION

A traveling vehicle relating to the present invention is configured to be able to travel smoothly even when a control method of motors is switched over. Next, a traveling vehicle 1 according to the instant embodiment will be explained.

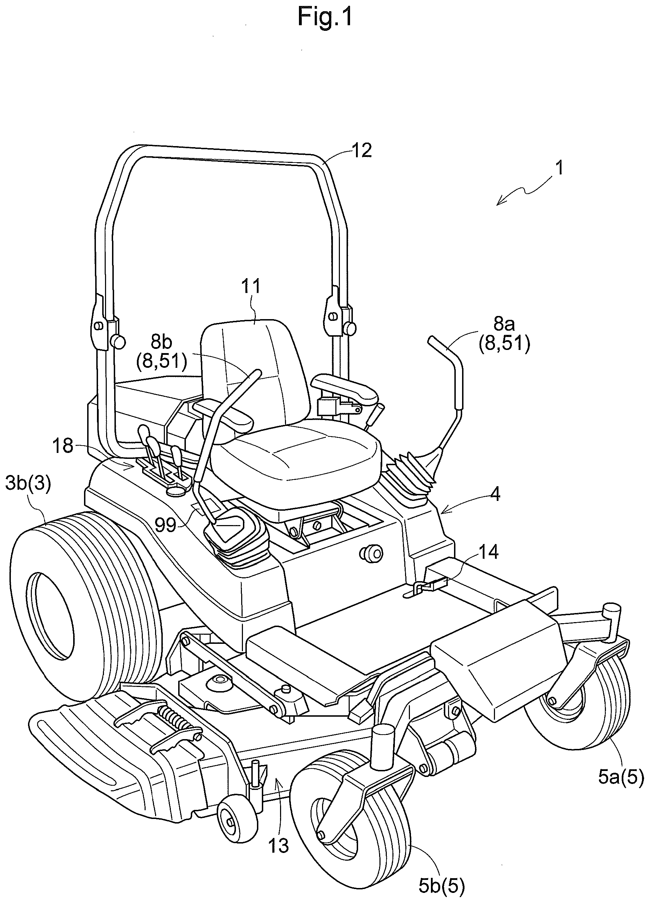

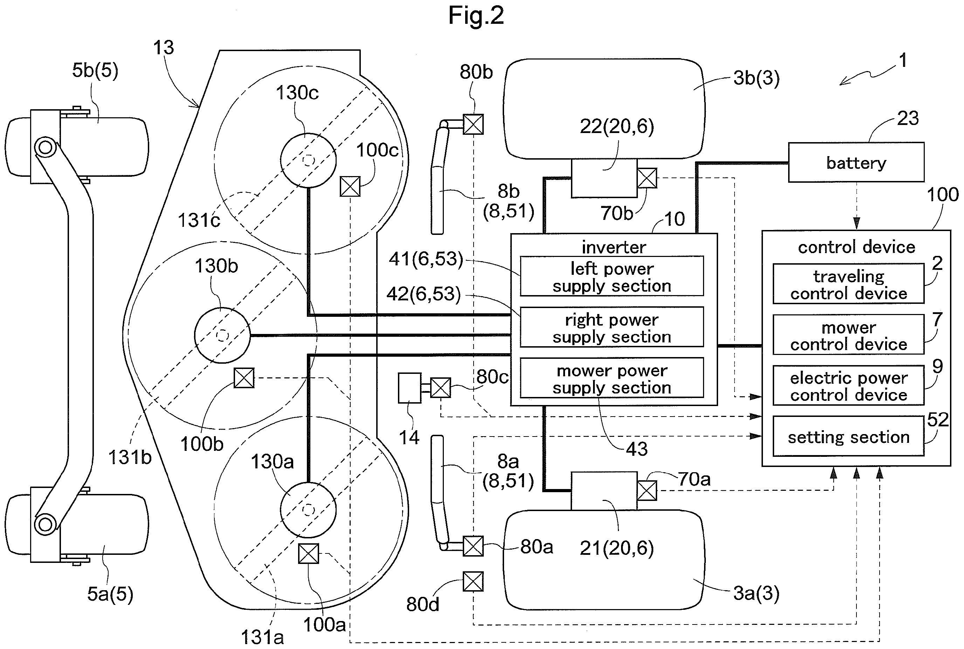

Fig. 1 shows a perspective view of a riding electric grass cutting machine as an example of the traveling vehicle 1 according to the instant embodiment. Fig. 2 shows a system diagram showing an electric system and a power system of the traveling vehicle 1. In the instant embodiment, as an example of the traveling vehicle 1, a riding electric grass cutting machine which travels in a field while carrying out a grass (lawn) cutting work will be explained.

An electric power control device 9 controls power used by the traveling vehicle 1 which travels while carrying out a utility work (a grass cutting work). The electric power used by the traveling vehicle 1 includes electric power used for traveling of the traveling vehicle 1, electric power used for the utility work carried out by the traveling vehicle 1, and electric power used for a user who uses the traveling vehicle 1. A specific example of the electric power used for traveling of the traveling vehicle 1 is electric power supplied to motors 20 which respectively drive a pair of left and right driving wheels 3 included in the traveling vehicle 1. A specific example of the electric power used for a utility work carried out by the traveling vehicle 1 is electric power to be supplied to motors ("mower motors 130a, 130b, 130c" to be described later) which rotate cutter blades used for a grass cutting work. A specific example of the electric power used for a user who uses the traveling vehicle 1 is electric power used for displaying by an instrument panel 99. The electric power control device 9 is mounted on the traveling vehicle 1 that carries out such work. The electric power control device 9 distributes the respective electric powers appropriately to functional sections for carrying out the respective functions.

As shown in Fig. 1 and Fig. 2, the riding electric grass cutting machine includes a machine body 4, a battery 23, a driver's seat 11, a ROPS frame 12 and a mower unit 13. The machine body 4 is supported by caster wheels 5 constituting front wheels and driving wheels 3 constituting rear wheels. The battery 23 is disposed at a rear portion of the machine body 4. The driver's seat 11 is disposed forwardly of the battery 23. The ROPS frame 12 is mounted erect from the rear side of the driver's seat 11. The mower unit 13 is an example of a utility work unit. This mower unit 13 is suspended from the machine body 4 to be lifted up/down via a lift (elevating/lowering) mechanism in a space beneath the machine body 4 and between the caster wheels 5 and the driving wheels 3.

The driving wheels 3 are driven by a traveling control unit 6. Operations of this traveling control unit 6 are controlled by a traveling control device 2. Operations of the mower unit 13 are controlled by a mower control device 7. Here, it is noted that the caster wheels 5 consist of a left caster wheel 5a and a right caster wheel 5b and the driving wheels 3 consist of a left driving wheel 3a and a right driving wheel 3b.

Forwardly of the driver's seat 11, there is provided a floor plate acting as a "footrest" for the driver. From this floor plate, a brake pedal 14 protrudes. On the left and right opposed sides of the driver's seat 11, there are disposed a left maneuvering lever 8a and a right maneuvering lever 8b. Further, on the side of the driver's seat 11, there is provided an electric operational panel 18. This electric operational panel 18 includes switch buttons, switch levers or the like of the electric control system. On this electric operational panel 18, a mower switch for activating the mower unit 13 and the instrument panel 99 described above are disposed. Incidentally, in the following explanation, the above-described left maneuvering lever 8a and the right maneuvering lever 8b will be generically referred to as "maneuvering lever 8" when no distinction therebetween is particularly needed.

In the instant embodiment, power sources for the left driving wheel 3a and the right driving wheel 3b are rotational forces from a left motor 21 and a right motor 22, respectively. Both the left motor 21 and the right motor 22 are in-wheel motors. Via a left power supply section 41, electric power is supplied to the left motor 21. The left power supply section 41 is included in an inverter 10. Via a right power supply section 42, electric power is supplied to the right motor 22. The right power supply section 42 also is included in the inverter 10. By changing the supplied electric powers respectively, it is possible to change at least one of a rotational speed and a torque. With this, respective rotational speeds (actual speeds) of the left driving wheel 3a and the right driving wheel 3b can be made different from each other. As a result, due to a rotational speed difference between the left driving wheel 3a and the right driving wheel 3b, the riding electric grass cutting machine makes a turn.

The traveling control unit 6 is a functional section for controlling traveling and turning of the riding electric grass cutting machine. In the instant embodiment, the traveling control unit 6 includes the left motor 21, the right motor 22 and the inverter 10 (in particular, the left power supply section 41 and the right power supply section 42) which were mentioned above. The inverter 10 supplies electric power to the left motor 21 and the right motor 22 respectively. Electric power outputted from the inverter 10 corresponds to a speed instruction value (a target value) calculated by the traveling control device 2. When the actual rotational speed (the actual speed) becomes smaller than a target value due to a traveling load, the electric power outputted from the inverter 10 will be corrected to increase the motor output torque. On the other hand, in the case of e.g. traveling on a downslope, if the actual rotational speed (the actual speed) becomes greater than the target value, the electric power outputted from the inverter 10 will be corrected to decrease the motor output torque.

The mower unit 13 includes three rotary blades 131a, 131b, 131c. These rotary blades 131a, 131b, 131c respectively use the mower motors 130a, 130b, 130c as their driving power sources. Electric power supplies to the mower motors 130a, 130b, 130c are carried out via a mower power supply section 43. This mower power supply section 43 too is included in the inverter 10. The mower power supply section 43 is controlled by the mower control device 7. This mower control device 7 constitutes a control device 100 together with the traveling control device 2 and the electric power control device 9 which were described above.

An operational amount (a pivot angle) of the left maneuvering lever 8a is detected by a left maneuvering angle detection sensor 80a. An operational amount (a pivot angle) of the right maneuvering lever 8b detected by a right maneuvering angle detection sensor 80b. Further, an operational angle of the brake pedal 14 is detected by a brake detection sensor 80c. An operation of the mower switch is detected by a mower sensor 80d. Further, a rotational speed of the left driving wheel 3a is detected by a left rear wheel rotation detection sensor 70a. A rotational speed of the right driving wheel 3b is detected by a right rear wheel rotation detection sensor 70b. Further, rotational speeds of the mower motors 130a, 130b, 130c are detected respectively by rotation sensors 100a, 100b, 100c. And, detection results from the respective sensors are transmitted to the control device 100 to be used by this control device 100 when necessary or appropriate.

In the traveling control device 2, based on operational amount of the respective maneuvering levers 8, electric powers to be supplied respectively to the left motor 21 and the right motor 22 are calculated. Further, in this traveling control device 2, by a known feedback control technique, the above-describe electric powers are corrected. Namely, the traveling control device 2 calculates required driving torques (to be referred to simply as "necessary torques" hereinafter) required by the left motor 21 and the right motor 22. Here, the necessary torques means a torque amount required by the left motor 21 or the right motor 22 for the actual speed to reach the target speed in case an actual rotational speed has not arrived at a target rotational speed with a control amount calculated by a target rotational speed set in correspondence with an operational amount by the left maneuvering lever 8a or the right maneuvering lever 8b. The traveling control device 2 derives such necessary torques from the target rotational speeds of the left driving wheel 3a and the right driving wheel 3b and the actual rotational speeds of the left driving wheel 3a and the right driving wheel 3b. Such target rotational speeds of the left driving wheel 3a and the right driving wheel 3b are obtained, based on detection results of the left maneuvering angle detection sensor 80a and the right maneuvering angle detection sensor 80b. The actual rotational speeds of the left driving wheel 3a and the right driving wheel 3b are obtained by the left rear wheel rotation detection sensor 70a and the right rear wheel rotation detection sensor 70b respectively. Then, based on such calculated necessary torques, the traveling control device 2 corrects the electric power amounts.

Next, there will be explained a function (to be referred to as "switchover function" hereinafter) relating to switchover of a control method of the motors 20 relating to the instant embodiment. This switchover function is realized by the respective functional sections of the driving wheels 3, the motor 20, an operational amount reception section 51, a setting section 52 and a motor driving section 53. In particular, the operational amount reception section 51, the setting section 52 and the motor driving section 53 are constituted of hardware and/or software including a CPU as the core component thereof, in order to carry out processes relating to the above-described switchover function.

The driving wheels 3 are provided in the machine body 4 as described above and consist of the left driving wheel 3a and the right driving wheel 3b, in the instant embodiment. The motor 20 is capable of driving the pair of left and right driving wheels 3 independently of each other. And, this motor 20 consists of the left motor 21 and the right motor 22 in this embodiment, as described above. The left motor 21 inputs a rotational force to the left driving wheel 3a. The right motor 22 inputs a rotational force to the right driving wheel 3b.

In the instant embodiment, the left driving wheel 3a and the right driving wheel 3b are configured to be able to input rotational forces of the left motor 21 and the right motor 22, independently of each other. In accordance with a difference between rotational forces inputted respectively to the left driving wheel 3a and the right driving wheel 3b, the traveling vehicle 1 makes a turn. Accordingly, in the instant embodiment, the pair of left and right driving wheels 3 are used also as steerable wheels.

The operational amount reception section 51 is capable of receiving the operational amounts respectively for the pair of left and right motors 20. In the instant embodiment, as described hereinbefore, on the left and right opposed sides of the driver's seat 11, there are disposed the left maneuvering lever 8a and the right maneuvering lever 8b. The left maneuvering lever 8a and the right maneuvering lever 8b are operated by a user. The maneuvering lever 8 consisting of the left maneuvering lever 8a and the right maneuvering lever 8b corresponds to the operational amount reception section 51. And, the maneuvering levers 8 receive operational amounts for the pair of left and right motors 20.

The setting section 52 can set a period of the first control method and a period of the second control method within a predetermined control cycle T for controlling driving of the motors 20, in accordance with the operational amounts. The first control method includes a predetermined first control parameter. The second control method includes a predetermined second control parameter. The "operational amounts" mean operational amounts received by the above-described operational amount reception section 51 and the operational amounts will be transmitted from the operational amount reception section 51 to the setting section 52.

Here, in this instant embodiment, the motors 20 are controlled by the known PWM (Pulse Width Modulation) control technique. Therefore, the "predetermined control cycle T for controlling driving of the motors 20" corresponds to the control cycle T in the PWM control, namely, the reciprocal of the driving frequency value of the PWM control. For instance, 100 milliseconds may be employed as the control cycle T.

Further, in the instant embodiment, driving of the motors 20 can be controlled with switching over of two different control methods within one control cycle. One of such two control methods is the first control method including the predetermined first control parameter. The other of such two control methods is the second control method including the predetermined second control parameter. In the instant embodiment, PI control is employed as the first control method including the predetermined first control parameter. And, in the first control method, the integral gain is a predetermined first value and the proportional gain is a predetermined second value. As the second control method including the predetermined second control parameter, P control is employed. In the second control method, the integral gain is zero value and the proportional gain is a predetermined third value. Therefore, in the instant embodiment, the setting section 52 sets a period for effecting the PI control and a period for effecting the P control, within the control cycle T in the PWM control. Here, some nonlimiting specific examples of the control parameters used in the instant embodiment are control gains, various kinds of limit values, switchover of control mode or algorithm, maps, ON/OFF of motor energization, etc.

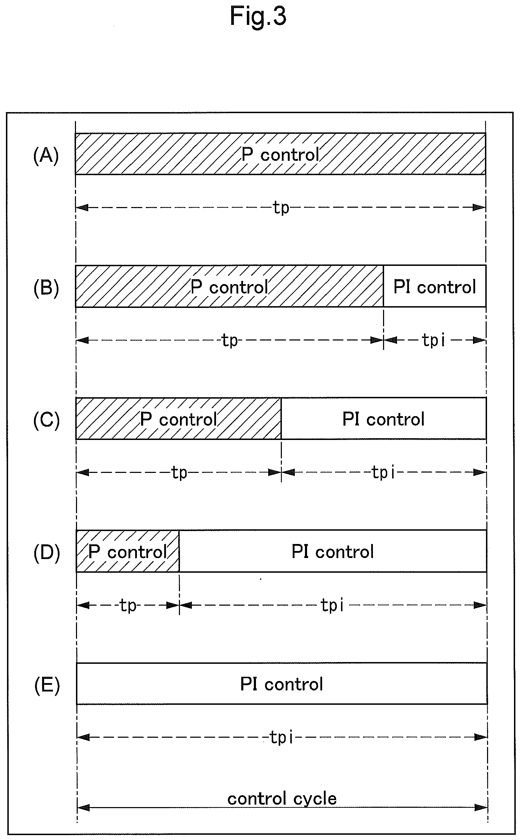

Fig. 3 shows one example of the predetermined control cycle T set by the setting section 52. Such control cycle T in the PWM control is a fixed value (a constant) according to the control frequency. The setting section 52, as shown in Fig. 3, sets, in this control cycle T, a P control period (tp) and a PI control period (tpi).

Specifically, in the case of (A) in Fig. 3, the P control period (tp) is set to a period of 100% in the control cycle T and the PI control period (tpi) is set to 0% in the control cycle T, respectively. In the case of (B) in Fig. 3, the P control period (tp) is set to a period of 75% in the control cycle T and the PI control period (tpi) is set to 25% in the control cycle T, respectively. Further, in the case of (C) in Fig. 3, the P control period (tp) is set to a period of 50% in the control cycle T and the PI control period (tpi) is set to 50% in the control cycle T, respectively. Further, in the case of (D) in Fig. 3, the P control period (tp) is set to a period of 25% in the control cycle T and the PI control period (tpi) is set to 75% in the control cycle T, respectively. Still further, in the case of (E) in Fig. 3, the P control period (tp) is set to a period of 0% in the control cycle T and the PI control period (tpi) is set to 100% in the control cycle T, respectively. Needless to say, Fig.3 shows just one example. The ratio between the P control period (tp) and the PI control period (tpi) in the control cycle T may be any other ratio than those shown in Fig. 3.

For instance, the setting section 52 will set the PI control period (tpi) within the control cycle T to zero if the rotational speed of the motor 20 is less than a predetermined rotational speed or will set the P control period (tp) within the control cycle T to zero if the rotational speed of the motor 20 is equal to or greater than the predetermined rotational speed. Here, the "rotational speed" of the motor 20 refers to the number of rotations of the left motor 21 or the right motor 22 within a predetermined period, which may be 1000 rpm, for example.

Here, the setting section 52 sets the PI control period (tpi) and the P control period (tp) within the control cycle T for the left motor 21 and sets the PI control period (tpi) and the P control period (tp) within the control cycle T for the right motor 22, independently of each other. Therefore, in case the rotational speed of the left motor 21 is less than 1000 rpm, the setting section 52 will set the PI control period (tpi) for the left motor 21 to zero as shown in Fig. 3 (A). Further, in case the rotational speed of the left motor 21 is equal to or greater than 1000 rpm, the setting section 52 will set the P control period (tp) for the left motor 21 to zero, as shown in Fig. 3 (E). Similarly, in case the rotational speed of the right motor 22 is less than 1000 rpm, the setting section 52 will set the PI control period (tpi) for the right motor 22 to zero as shown in Fig. 3 (A). Further, in case the rotational speed of the right motor 22 is equal to or greater than 1000 rpm, the setting section 52 will set the P control period (tp) for the right motor 22 to zero, as shown in Fig. 3 (E).

In case switchover from the control state shown in Fig. 3 (A) to the control state shown in Fig. 3 (E) is to be effected, namely, when the control method of driving the left motor 21 and the right motor 22 is switched from the P control to the PI control at some point, the traveling vehicle 1 will make a sudden acceleration, thus possibly giving damage to the road surface. Further, damage may be given to the road surface at the time of zero-turn also. Then, advantageously when the control method for driving the left motor 21 and the right motor 22 respectively is switched from the P control to the PI control, the setting section 52 progressively reduces the ratio of the P control period (tp) within the control cycle T from 100% to 0% and also progressively increases the ratio of the PI control period (tpi) from 0% to 100%. Namely, in case the control method of driving the left motor 21 and the right motor 22 respectively is switched from the P control to the PI control, advantageously, the setting section 52 will switch over from the control state shown in Fig. 3 (A) to the control state shown in Fig. 3 (E) through transition of control states shown in Fig. 3 (B) through (D).

The motor driving section 53 is capable of driving the motors 20 based on setting results made by the setting section 52. Here, the setting results made by the setting section 52 are the control methods set by the setting section 52 for driving the motors 20. Therefore, to the motor driving section 53, control methods set by the setting section 52 for driving the motors 20 will be transmitted. The left power supply section 41 and the right power supply section 42 described above correspond to such motor driving section 53. With the above-described arrangements, the traveling vehicle 1 can travel smoothly, and also it is possible to prevent the driving wheels 3 to be locked at zero speed or an extremely low speed. So, damage to the road surface can be avoided.

### [Other Embodiments]

In the foregoing embodiment, the explanation was made with citing an electric grass cutting machine as an example of the traveling vehicle 1. However, the traveling vehicle 1 may be a tractor for carrying out a plowing work in a field for example, or may be a rice planting machine also. Still further, it may be a combine for carrying out a culm harvesting work in a field or may be a seed sowing machine for sowing seeds. Still further, it may be a riding management machine for carrying out e.g. a chemical agent spraying work, etc. Namely, specific examples of the traveling vehicle 1 include a grass cutting machine, a tractor, a rice planting machine, a combine, a seed sowing machine, a riding management machine, etc. Needless to say, the present invention is applicable also to a traveling vehicle 1 used for carrying out works different from the above in a field. Moreover, the present invention is applicable not only to a riding traveling vehicle 1, but also to a traveling vehicle 1 that can be remotely controlled.

In the foregoing embodiment, it was explained that the first control method is the PI control and the second control method is the P control. However, the first control method and the second control method may be other control methods. Specifically, as the first control method and the second control method, the fuzzy control or neuro control may be employed, and the PID control may be employed also. Still further, the first control method and the second control method may be constituted of a same control method, with control parameters thereof being made different from each other.

In the foregoing embodiment, it was explained that the setting section 52 progressively reduces the ratio of the P control period (tp) within the control cycle T from 100% to 0% and progressively increases the ratio of the PI control period (tpi) from 0% to 100%. However, it is also possible to arrange such that the setting section 52 progressively reduces the ratio of the PI control period (tpi) within the control cycle T from 100% to 0% and progressively increases the ratio of the P control period (tp) from 0% to 100%.

Still further, it is also possible to arrange such that the setting section 52 does not change the ratio of the P control period (tp) and the ratio of the PI control period (tpi) within the control cycle T as fixed values, but changes the control cycle T instead.

In the foregoing embodiment, it was explained that if the rotational speed of the left motor 21 is less than 1000 rpm for instance, the setting section 52 sets the PI control period (tpi) of the left motor 21 to zero as shown in Fig. 3 (A) and sets the P control period (tp) of the left motor 21 to zero as shown in Fig 3 (E) when the rotational speed of the left motor 21 is equal to or greater than 1000 rpm and explained also that if the rotational speed of the right motor 22 is less than 1000 rpm for instance, the setting section 52 sets the PI control period (tpi) of the right motor 22 to zero as shown in Fig. 3 (A) and sets the P control period (tp) of the right motor 22 to zero as shown in Fig 3 (E) when the rotational speed of the right motor 22 is equal to or greater than 1000 rpm. However, this 1000 rpm is only one example, it may be any other rotational speed. Still further, it is also possible to arrange such that the conditions shown Fig. 3 (A) to (E) are switched over sequentially in accordance with the rotational speed of the motor 20. In such case, in case the rotational speed of the motor 20 is low, the setting will be made as shown in Fig. 3 (A) and the setting will be made as shown in Fig. 3 (E) in case the rotational speed of the motor 20 is high.

In the foregoing embodiment, it was explained that the setting section 52 sets the period of the first control method within the control cycle T to zero in case the rotational speed of the motor 20 is less than a predetermined rotational speed and sets the period of the second control method within the control cycle T to zero in case the rotational speed of the motor 20 is equal to or greater than the predetermined rotational speed. However, it is also possible to arrange such that in case an operational amount increases a rotational speed of the motor 20 at the time of reception of this operational amount to be greater than a preset change amount, the setting section 52 sets both the first control method period and the second control method period to values greater than zero.

Namely, preferably, in case there is no instruction for accelerating the traveling vehicle 1, the motor 20 may be driven by the control method of Fig. 3 (A), whereas, in case there is an instruction for accelerating the traveling vehicle 1, the motor 20 will be driven by the control method of Fig. 3 (E). In such case, advantageously, at the time of switchover from Fig. 3 (A) to Fig. 3 (E), also, the switchover should be made from Fig. 3 (A) to Fig. 3 (E), via the transition from Figs. 3 (B) through (D). Or, advantageously, in case there is no instruction for accelerating the traveling vehicle 1, the motor 20 will be driven by the control method of Fig. 3 (E), whereas, in case an instruction for accelerating the traveling vehicle 1 is received, the motor 20 will be driven by the control method of Fig. 3 (A). In such case, advantageously, at the time of switchover from Fig. 3 (E) to Fig. 3 (A), also, the switchover should be made from Fig. 3 (E) to Fig. 3 (A), via the transition from Figs. 3 (D), (C), (B). Incidentally, the "rotational speed of the motor 20 at the time of reception of an operational amount" corresponds to a rotational speed of the motor 20 immediately before the reception of the operational amount. Advantageously, the switchover of Figs. 3 (B) through (D) can be made with using acceleration as a threshold value.

In the foregoing embodiment, it was explained that the pair of left and right driving wheels 3 are employed as steerable wheels. However, the pair of left and right driving wheels 3 may not be employed as steerable wheels.

In the foregoing embodiment, it was disclosed that in Fig. 3 (B) through (D), when the P control period (tp) and the PI control period (tpi) are to be set within the control cycle T, the P control period (tp) is set first within the control cycle T and then the PI control period (tpi) is set. However, when the P control period (tp) and the PI control period (tpi) are to be set within the control cycle T, the PI control period (tpi) may be set first within the control cycle T and then the P control period (tp) may be set.

### Industrial Applicability

The present invention is applicable to a traveling vehicle capable of driving a pair of left and right driving wheels independently of each other.

### Description of Reference Signs

- 1:: traveling vehicle
- 3:: driving wheel
- 20:: motor
- 51:: operational amount reception section
- 52:: setting section
- 53:: motor driving section
- T:: control cycle

## Claims

1. A traveling vehicle comprising:
a pair of left and right driving wheels (3);
a pair of left and right motors (20) capable of driving the pair of left and right driving wheels (3) independently of each other;
an operational amount reception section (51) capable of receiving operational amounts respectively for the pair of left and right motors (20);
a setting section (52) capable of setting a period of a first control method having a predetermined first control parameter and a period of a second control method having a predetermined second control parameter, within a predetermined control cycle for controlling driving of the motors, in accordance with the operational amounts; and
a motor driving section (53) capable of driving the respective motors based on result of setting made by the setting section.

2. The traveling vehicle of claim 1, wherein the setting section (52) is configured to progressively decrease a ratio of one of the period of the first control method and the period of the second control method within the control cycle from 100% to 0% and to progressively increase a ratio of the other of the period of the first control method and the period of the second control method within the control cycle from 0% to 100%.

3. The traveling vehicle of claim 1 or 2, wherein the setting section (52) is configured to set the period of the first control method within the control cycle to zero when a rotational speed of the motor is less than a predetermined rotational speed and to set the period of the second control method within the control cycle to zero when the rotational speed of the motor is equal to or greater than the predetermined rotational speed.

4. The traveling vehicle of claim 1 or 2, wherein the setting section (52) is configured to set both the period of the first control method and the period of the second control method within the control cycle to values greater than zero, in case the operational amount increase the rotational speed of the motor at the time of reception of this operational amount to be greater than a preset change amount.

5. The traveling vehicle of any one of claims 1-4, wherein:
the first control method is PI control in which an integral gain is a predetermined first value and a proportional gain is a predetermined second value; and
the second control method is P control in which the integral gain is zero value and the proportional gain is a predetermined third value.

6. The traveling vehicle of any one of claims 1-5, wherein the pair of left and right driving wheels (3) are used also as steerable wheels.

## Patentansprüche

1. Fahrendes Fahrzeug, umfassend:
ein Paar aus einem linken und einem rechten Antriebsrad (3),
ein Paar aus einem linken und einem rechten Motor (20), die in der Lage sind, das Paar aus einem linken und einem rechten Antriebsrad (3) unabhängig voneinander anzutreiben,
eine Betriebsmengen-Empfangssektion (51), die in der Lage ist, entsprechende Betriebsmengen für das Paar aus einem linken und einem rechten Motor (20) zu empfangen,
eine Einstellsektion (52), die in der Lage ist, einen Zeitraum eines ersten Steuerverfahrens mit einem vorbestimmten ersten Steuerparameter und einen Zeitraum eines zweiten Steuerverfahrens mit einem vorbestimmten zweiten Steuerparameter innerhalb eines vorbestimmten Steuerzyklus zum Steuern des Antriebs der Motoren gemäß den Betriebsmengen einzustellen, und
eine Motorantriebssektion (53), die in der Lage ist, die jeweiligen Motoren basierend auf einem Ergebnis der von der Einstellsektion vorgenommenen Einstellung anzutreiben.

2. Fahrendes Fahrzeug nach Anspruch 1, wobei die Einstellsektion (52) dazu ausgestaltet ist, ein Verhältnis von einem von dem Zeitraum des ersten Steuerverfahrens und dem Zeitraum des zweiten Steuerverfahrens innerhalb des Steuerzyklus schrittweise von 100 % auf 0 % zu verringern und ein Verhältnis des anderen von dem Zeitraum des ersten Steuerverfahrens und dem Zeitraum des zweiten Steuerverfahrens innerhalb des Steuerzyklus schrittweise von 0 % auf 100 % zu erhöhen.

3. Fahrendes Fahrzeug nach Anspruch 1 oder 2, wobei die Einstellsektion (52) dazu ausgestaltet ist, den Zeitraum des ersten Steuerverfahrens innerhalb des Steuerzyklus auf null einzustellen, wenn eine Drehzahl des Motors geringer als eine vorbestimmte Drehzahl ist, und den Zeitraum des zweiten Steuerverfahrens innerhalb des Steuerzyklus auf null einzustellen, wenn die Drehzahl des Motors gleich oder größer als die vorbestimmte Drehzahl ist.

4. Fahrendes Fahrzeug nach Anspruch 1 oder 2, wobei die Einstellsektion (52) dazu ausgestaltet ist, sowohl den Zeitraum des ersten Steuerverfahrens als auch den Zeitraum des zweiten Steuerverfahrens innerhalb des Steuerzyklus auf Werte größer als null einzustellen, falls die Betriebsmenge die Drehzahl des Motors zum Zeitpunkt des Empfangs dieser Betriebsmenge so erhöht, dass sie größer als eine voreingestellte Änderungsmenge ist.

5. Fahrendes Fahrzeug nach einem der Ansprüche 1 - 4, wobei:
das erste Steuerverfahren eine PI-Steuerung ist, in welcher eine integrale Verstärkung ein vorbestimmter erster Wert ist und eine proportionale Verstärkung ein vorbestimmter zweiter Wert ist, und
das erste Steuerverfahren eine P-Steuerung ist, in welcher die integrale Verstärkung ein Null-Wert ist und die proportionale Verstärkung ein vorbestimmter dritter Wert ist.

6. Fahrendes Fahrzeug nach einem der Ansprüche 1 - 5, wobei das Paar aus einem linken und einem rechten Antriebsrad (3) auch als Lenkungsräder verwendet wird.

## Revendications

1. Véhicule de déplacement comprenant :
une paire de roues motrices gauche et droite (3) ;
une paire de moteurs gauche et droit (20) pouvant entraîner la paire de roues motrices gauche et droite (3) indépendamment l'une de l'autre ;
une section de réception de quantité opérationnelle (51) pouvant recevoir des quantités opérationnelles respectivement pour la paire de moteurs gauche et droit (20) ;
une section de réglage (52) pouvant régler une période d'un premier procédé de commande ayant un premier paramètre de commande prédéterminé et une période d'un second procédé de commande ayant un second paramètre de commande prédéterminé, dans un cycle de commande prédéterminé pour commander l'entraînement des moteurs, selon les quantités opérationnelles ; et
une section d'entraînement de moteur (53) pouvant entraîner les moteurs respectifs sur la base du résultat de réglage réalisé par la section de réglage.

2. Véhicule de déplacement selon la revendication 1, dans lequel la section de réglage (52) est configurée pour réduire progressivement un rapport de l'une parmi la période du premier procédé de commande et la période du second procédé de commande dans le cycle de commande de 100% à 0% et pour augmenter progressivement un rapport de l'autre parmi la période du premier procédé de commande et la période du second procédé de commande dans le cycle de commande de 0% à 100%.

3. Véhicule de déplacement selon la revendication 1 ou 2, dans lequel la section de réglage (52) est configurée pour régler la période du premier procédé de commande dans le cycle de commande à zéro lorsqu'une vitesse de rotation du moteur est inférieure à une vitesse de rotation prédéterminée et pour régler la période du second procédé de commande dans le cycle de commande à zéro lorsque la vitesse de rotation du moteur est égale ou supérieure à la vitesse de rotation prédéterminée.

4. Véhicule de déplacement selon la revendication 1 ou 2, dans lequel la section de réglage (52) est configurée pour régler à la fois la période du premier procédé de commande et la période du second procédé de commande dans le cycle de commande sur des valeurs supérieures à zéro, dans le cas dans lequel la quantité opérationnelle augmente la vitesse de rotation du moteur au moment de la réception de cette quantité opérationnelle pour qu'elle soit supérieure à une quantité de changement prédéterminée.

5. Véhicule de déplacement selon l'une quelconque des revendications 1 à 4, dans lequel :
le premier procédé de commande est une commande PI dans laquelle un gain intégral est une première valeur prédéterminée et un gain proportionnel est une deuxième valeur prédéterminée ; et
le second procédé de commande est une commande P dans laquelle le gain intégral est une valeur nulle et le gain proportionnel est une troisième valeur prédéterminée.

6. Véhicule de déplacement selon l'une quelconque des revendications 1 à 5, dans lequel la paire de roues d'entraînement gauche et droite (3) sont utilisées également en tant que roues orientables.
